# EUROPEAN PATENT APPLICATION

(11) **EP 1 464 998 A2**
(43) Date of publication of application: **06.10.2004**
(21) Application number: 04425054.6
(22) Date of filing: 29.01.2004
(51) Int. Cl.: G02B 6/44

(54) **Junction and positioning module for optical fibres**

(30) Priority: 24.03.2003 IT rm20030056 U
(71) Applicant: FIBOT HOLDING LTD., Pieta'MSD - Malta (MT)
(72) Inventor: Vella Gregory, Joseph, Pieta' MSD Malta (MT)
(74) Representative: Iannone, Carlo Luigi

(57) **Abstract**

The invention relates to an optical fibre junction and/or positioning module comprising a support plate (7) and at least a junction and/or positioning plate, said support plate comprising means (12) for coupling with corresponding means (13) provided on said junction and/or positioning plate, characterised in that said support plate provides a single common track (17) for all the fibres directed to the relevant junction and/or positioning plates (8).

## Description

The present invention concerns a junction and positioning module for optical fibres.
Innovation concerns the infrastructure technical field for optical fibre cable networks, and in a more general sense, the telecommunication technical field.

As it is well known, companies handling telephone or telecommunication services and realising its own cable transmission network, usually employ as physical transmission support optical fibres, making a bundle to create optical cables, in view of the large transportation capability and efficiency of the same.

Optical fibres are really delicate and it is very important that they are mechanically protected from outside, to prevent phenomenon such as increase of the intrinsic attenuation and/or reduction of the operative useful life of the same fibres. This needing is more important in the points of the telecommunication networks wherein fibres are not protected within the cables, but are directly exposed outside.

Particularly, these exposition conditions of the optical fibres occurring in correspondence of the coupling between cables (necessary to realise couplings having a length longer than that of the single pieces of fibre cables) and of the terminations of the same fibres (where it is necessary to reach the fibres by optical connectors).

In view of the above, particular attention has been paid to the realisation of suitable containers to house junctions and termination of optical fibre cables, easily reachable for each kind of intervention, including maintenance interventions.

Generally, containers for housing the junctions are called junction boxes, while termination containers are called optical drawers or cabinets. Within these containers, frames are provided for positioning junction and/or positioning modular elements for fibres and optical fibre guide modular elements, the number of which can vary according to the specific needing. Junction and/or positioning modules provide means for accommodating extra length of the optical fibres, necessary for possible other subsequent junctions, and anti-stress paths, to prevent that fibres are subjected to too high stresses during the building and maintenance of the line.

Particularly, junction and/or positioning modules comprise a junction and/or positioning plate for the optical fibres and a support plate for coupling with support frame and for positioning a plurality of a junction plate.

According to the known art, each support plate has two lateral folded ends, for realising fibre paths, defined and protected by tabs. Being junction and/ disposition modules of the fibres placed one after the other along the frame, fibre paths provided on the two lateral edges of said support plates comprise, along with the corresponding paths of the adjacent support plates, two continuous paths. Along the first one of said paths all the fibres are gathered, ascending toward the junction and/or positioning modules to which are destined, while in the second one of said paths gathers possible fibres going back from the junction and/or positioning modules toward the cable outlet ducts.

According to the known art, support plates are comprised each one of a base element and of a support element, coupable and detachable each other thanks to coupling means, on the front face of the support element being provided hinges, realising the coupling point with junction and/or positioning plate for optical fibres.

On the front face of the base element and of the support element of he support plate are further present fibre guide means, starting from the two lateral ends of the same plate and reaching the relevant junction and/or positioning plates. According to the known art, said guide means are comprised of single tracks, divided each other by dividing walls, each one destined to the fibres addressed to a specific junction and/or positioning plate of the optical fibres.

This kind of configuration creates different drawbacks. First of all, is there the possibility that the fibres, along the very small path destined to the same, does not succeed moving freely and adsorbing stresses due to the handlings during its installation, being subjected to stress during the whole recovery period. This drawback is more felt with the so called ribbon type fibres, i.e. fibres the cross section of which has a rectangular shape rather than a circular shape, having a bigger difficulty to dispose of stresses induced from outside.

Furthermore, installation of fibre within junction and/or positioning plate comprising support plates of the above kind requires a long time due to the choice of the proper track for the junction and/or positioning plate to which the fibre is addressed and to the positioning of the fibre within the track.

Still more, in case it I necessary or in any case preferable the passage of a fibre or of a bundle of fibres from a first to a second junction and/or positioning plate, this path is hindered by the presence of dividing walls of the different tracks.

Italian patent application N° RM2002A000636, filed in the name of the same Applicant, suggests a support plate comprising guide means for the fibres allowing to have multiple, free and not pre-set, paths, that can be adapted on the basis of the mechanical features of the main coating (cladding) of the fibres, preventing any residual bending moment of the same, due to their permanent positioning. These free paths are realised replacing the single plates, provided according to the teachings of the prior art, with pins junction from the surface of the support plate, said pins being provided at the upper end of junction tongues for containing the fibres. Presence and positioning of the pins allow a free and anti stress motion of the fibres.

However, in case the work is carried out by not skilled personnel, it is not possible to exclude that fibres are positioned following paths subjecting them to not admissible stresses, e.g. making them following curvature rays lower than the critical curvature ray, thus damaging them.

Object of the present invention is therefore that of providing a junction and/or positioning module for optical fibres comprising a support plate provided with fibre guide means able to prevent that the same are subjected to any residual stress.

It is therefore specific object of the present invention an optical fibre junction and/or positioning module comprising a support plate and at least a junction and/or positioning plate, said support plate comprising means for coupling with corresponding means provided on said junction and/or positioning plate, characterised in that said support plate provides a single common track for all the fibres directed to the relevant junction and/or positioning plates.

Other embodiments of the invention are described in the dependent claims.

The present invention will be now described, for illustrative but not limitative purposes, according to its preferred embodiments, with particular reference to the figures of the enclosed drawings, wherein:
Figure 1 shows a perspective view of an optical fibre junction box;
Figure 2 shows a perspective view of an optical fibre junction and/or positioning module according to the prior art;
Figure 3 shows a perspective view of a support plate according to the invention;
Figure 4 shows a perspective view of the base element of the support plat of figure 3;
Figure 5 shows a perspective view of the support element of the support plate of figure 3; and
Figure 6 is a top view of an optical fibre junction and/or positioning plate according to the present invention.

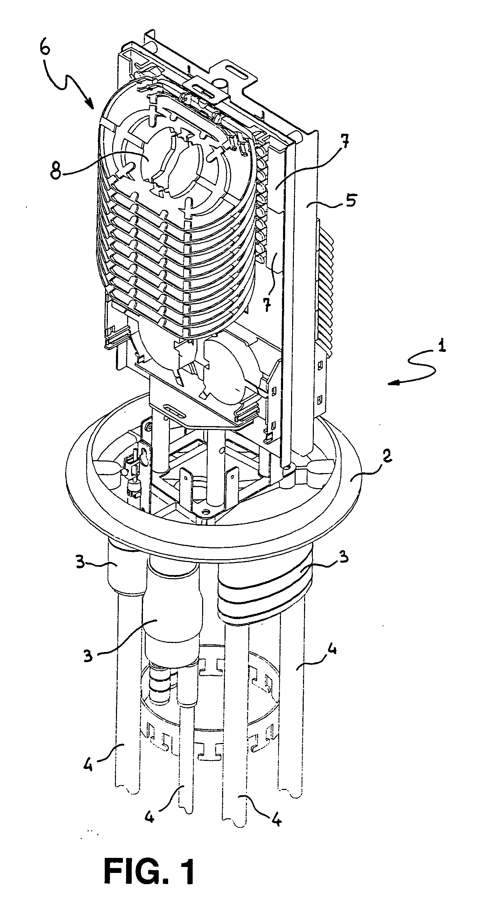

Making first reference to figure 1, it is shown an optical fibre cable junction box 1, without the cover, to have the inner elements shown. It is possible to individuate a base, different inlet and outlet channels 3 for the optical fibre cables 4, the frame 5 supporting different modular elements, among which optical fibre junction and/or positioning modules 6 are shown, each one provided with a support plate 7 and with a plurality of junction and/or positioning plates 8.

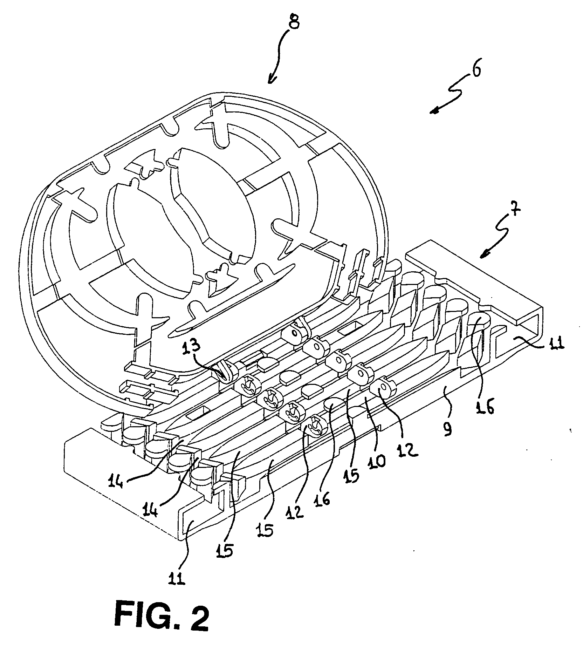

Making reference to figure 2, it is shown an optical fibre junction and/or positioning modules 6 according to the prior art, wherein it is possible to observe the support plate 7 and a junction and/or positioning plate 8.

It is shown that the support plate 7 provides a base element 9 and a support element 10, the base element providing two lateral paths 11 for the fibres and the support element 10 providing hinges 12 for coupling with corresponding means 13 provided on the optical fibre junction and/or positioning plate 8.

Both elements of the support plates 7 are provided with a plurality of single tracks 14, divided each other by division walls 15. There are also tabs 16 for containing the fires, i.e. for preventing that fibres falls from the support plate 7. it is evident that fibres, along their paths 11 from the periphery of the support plate 7, wherein all the fibre pass, toward the relevant junction and/or positioning plate 8, and vice versa, are restrained according to pre-set directions, and that it is impossible to direct the fibres from a junction and/or positioning plate 8 to another on, when it is necessary, without passing through the paths 11.

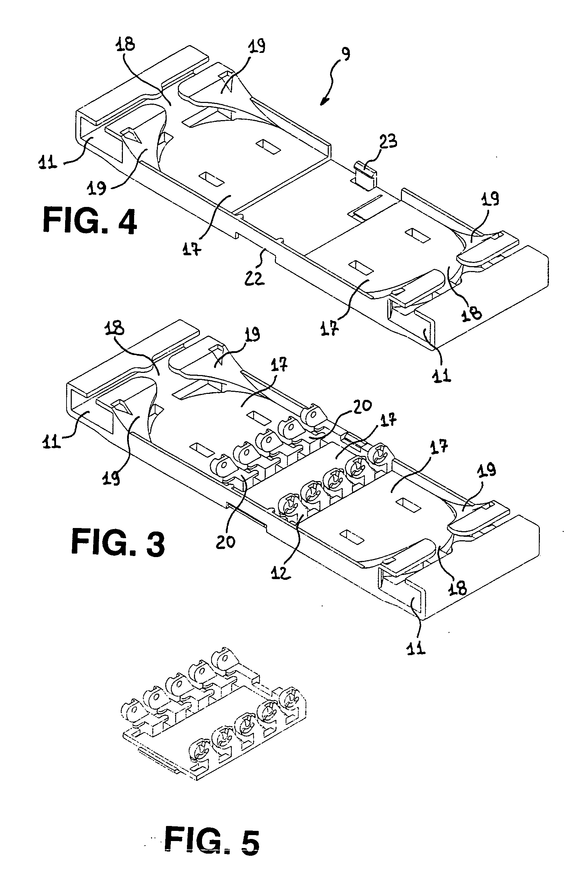

Figure 3 shows a support plate 7, comprised of the base element 9 and of the support element 10. The base element provides two lateral paths 11 for the fibres and the support element 10 provides hinges 12 for coupling with corresponding coupling means (not shown), provided on the relevant junction and/or positioning plate.

Base element 8 and support element 10 are both provided with a single track 17, common for all fibres directed to the relevant junction and/or positioning plate 8, said common track 17 being reachable by the fibre arriving from the paths 11 through a single common passage 18, with common tabs 19 for containment of all the fibres that from paths 11 are directed toward the relevant junction and/or positioning plate 8 of the module, i.e. for preventing to the same fibres to fall from the support plate 7.

In the support plate area 7 close to the hinges 12, from which fibres start to enter within the junction and/or positioning plate 8, there is further a plurality of separated tabs 20, for containing the single fibres or group of fibres destined to each junction plate 8.

Figures 4 and 5 respectively show base element 9 and support element 10 of a single support plate 7, as already illustrated making reference to figure 3. It is particularly possible to observe the coupling means between the base element 9 and the support element 10, particularly the tab 21 of the support element 10 for insertion within the housing 22 of the base element 9, and the tab 23 of the base element 9 for snap coupling with the seat of the support element 0.

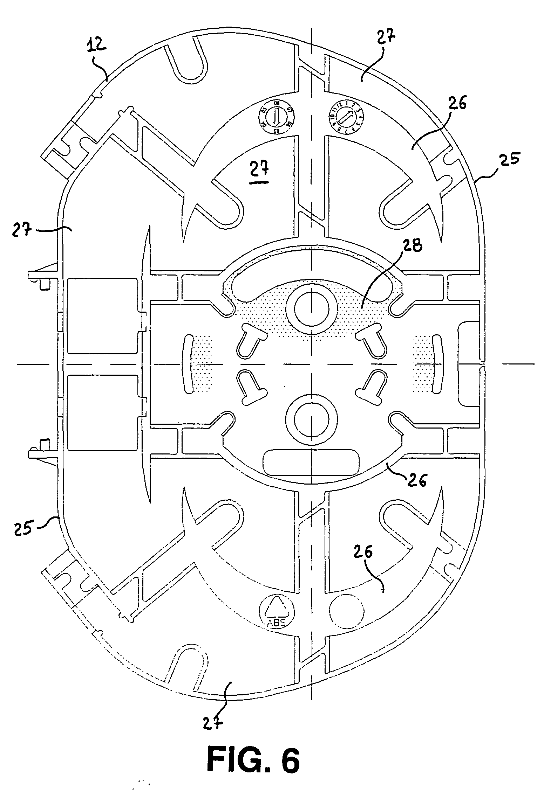

Finally, figure 6 shows a junction and/or positioning plate 8 on which, by perimeter walls 25 and reliefs 26, zone 27 are defined for positioning the fibres. Some of these zones, passing through which would cause a folding of the fibre beyond the minimum acceptable curvature ray, are realised with a more rough surface, in such a way that the operator can immediately individuate them and be alerted about they unsuitability to the positioning of the same fibres.

The solution according to the present invention allows the full path freedom for the fibres on the support plate, without any restraint that could cause damages to the fibres if installed by not skilled personnel. Lacking pre-set paths, in fact, fibres can distend in function of the applied stresses.

Lack of transverse walls further allows the passage of the fibres from a junction and/or positioning plate 8 to another one, without being it necessary to pass through the lateral paths 11.

Furthermore, coupling the path freedom of the fibres with independency between base and support of the support plate, a further advantage is the possibility of housing junction and/or positioning plate having different shape and thickness using the same support plate, only replacing the support element 10 with a second support element the hinges of which are provided at a different distance each other. It follows that on the same system it is possible to use junction and/or positioning plates that can house a different number of fibres.

Finally, shape of the junction and/or positioning plate 8 immediately makes it viewable for the operator the zones the crossing of which would involve an excessive curvature for the fibres.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Optical fibre junction and/or positioning module comprising a support plate (7) and at least a junction and/or positioning plate, said support plate (7) comprising means (12) for coupling with corresponding means (13) provided on said junction and/or positioning plate (8), **characterised in that** said support plate (7) provides a single common track (17) for all the fibres directed to the relevant junction and/or positioning plates (8).

2. Optical fibre junction and/or positioning module according to claim 1, **characterised in that** said support plate (7) further comprises lateral paths (11) for the passage of the fibres directed to the junction and/or positioning plates (8).

3. Optical fibre junction and/or positioning module according to claim 2, **characterised in that** access to the single common track (17) for the fibres arriving from said paths (11) and directed toward the different junction and/or positioning plates (8) is allowed by a single common passage (18).

4. Optical fibre junction and/or positioning module according to one of the preceding claims, **characterised in that** it comprises fibre containment means (19, 20).

5. Optical fibre junction and/or positioning module according to claim 3, **characterised in that** said fibre containment means (19, 20) comprise containment means (19, 20) for the hole bundle of fibres directed toward the different junction and/or positioning plates (8).

6. Optical fibre junction and/or positioning module according to one of the preceding claims 4 - 5, **characterised in that** said fibre containment means (19, 20) comprise containment means (19, 20) for each single fibre or group of fibres directed toward the relevant single junction and/or positioning plate (8).

7. Optical fibre junction and/or positioning module according to one of the preceding claims 4 - 6, **characterised in that** said fibre containment means (19, 20) comprise at least a tab (19, 20), projecting from the fibre positioning surface on said support plate (7) and the free end of which is folded in a position substantially parallel to said surface.

8. Optical fibre junction and/or positioning module according to one of the preceding claims 4 - 6, **characterised in that** said fibre containment means (19, 20) comprise at least a tab (19, 20), projecting from elements which are a relieved with respect to the fibre positioning surface on said support plate (7), with a direction substantially parallel to that of said surface.

9. Optical fibre junction and/or positioning module according to one of the preceding claims, comprising at least a junction and/or positioning plate (8), **characterised in that** at least said junction and/or positioning plate (8) provides means (28) for individuating zones not suitable for positioning the optical fibres.

10. Optical fibre junction and/or positioning module according to claim 9, **characterised in that** said means (28) for individuating zones not suitable for positioning the optical fibres provide the realisation of the not suitable portion I such a way that it is discernible a vista, e.g. by coloration, and/or in such a way that it can be traced by touch, e.g. by knurling.
